Europäisches Patentamt

European Patent Office

Office européen des brevets

(11) Numéro de publication: **0 414 582 A1**

## (12) DEMANDE DE BREVET EUROPEEN

(21) Numéro de dépôt: 90401847.0

(22) Date de dépôt: 27.06.90

(51) Int. Cl.5: **E05D 15/52**, B23P 21/00, E05B 17/00

(30) Priorité: 13.07.89 FR 8909558

(43) Date de publication de la demande:
27.02.91 Bulletin 91/09

(84) Etats contractants désignés:
AT BE CH DE DK ES GB GR IT LI NL SE

(71) Demandeur: FERCO INTERNATIONAL Usine de Ferrures de Bâtiment Société à responsabilité limitée
2, rue du Vieux-Moulin Reding
F-57400 Sarrebourg(FR)

(72) Inventeur: Kautt, Jean-Jacques
24, rue Pertois
F-67100 Strasbourg(FR)

(74) Mandataire: Rodhain, Claude et al
Cabinet Claude Rodhain 30, rue la Boétie
F-75008 Paris(FR)

(54) Installation pour l'assemblage automatique d'un dispositif de ferrure en particulier d'un verrouillage latéral destiné à être monté sur les ouvrants, notamment de fenêtre oscillobattantes.

(57) Actuellement les dispositifs de verrouillage latéral sont réalisés grâce à des chaînes de montage où chaque assemblage est effectué par un poste manuel. L'invention a pour but de remédier aux divers inconvénients de telles installations et concerne à cet effet une installation d'assemblage automatisant les différentes opérations, qui s'enchaînent selon un flux continu.

Pour ce faire, selon un mode préféré de réalisation, l'installation conforme à l'invention comporte une ligne d'assemblage automatique (200) des différentes pièces élémentaires constituant le renvoi d'angle et, associée à cette dernière, une ligne d'assemblage automatique (100) de la têtière, de la tringle, d'au moins un galet de verrouillage et d'au moins un ressort de pression avec le renvoi d'angle équipé.

De préférence ces deux lignes sont constituées de postes modulaires disposés selon deux plans (PP) et (P'P') parallèles. Elles sont reliées par un convoyeur transversal (40).

L'invention concerne une installation pour l'assemblage automatique d'un dispositif de ferrure en particulier couramment appelé verrouillage latéral, destiné à être monté sur les ouvrants, notamment de fenêtres oscillo-battantes.

Ce dispositif de ferrure permet de multiplier les points de verrouillage d'une fenêtre oscillo-battante en équipant l'ouvrant sur sa traverse inférieure et/ou sur son montant arrière, de galets de verrouillage. Grâce à ce dispositif de ferrure, les mouvements des tringles (crémone verticale avant et têtière horizontale supérieure) commandées par la poignée de la serrure sont transmis au niveau des traverses et des montants de l'ouvrant.

Des gâches montées sur la traverse inférieure ou sur le montant du dormant coopèrent avec ce(s) galet(s) de verrouillage. Selon les dimensions de la fenêtre, le verrouillage latéral comporte un ou deux galets de verrouillage.

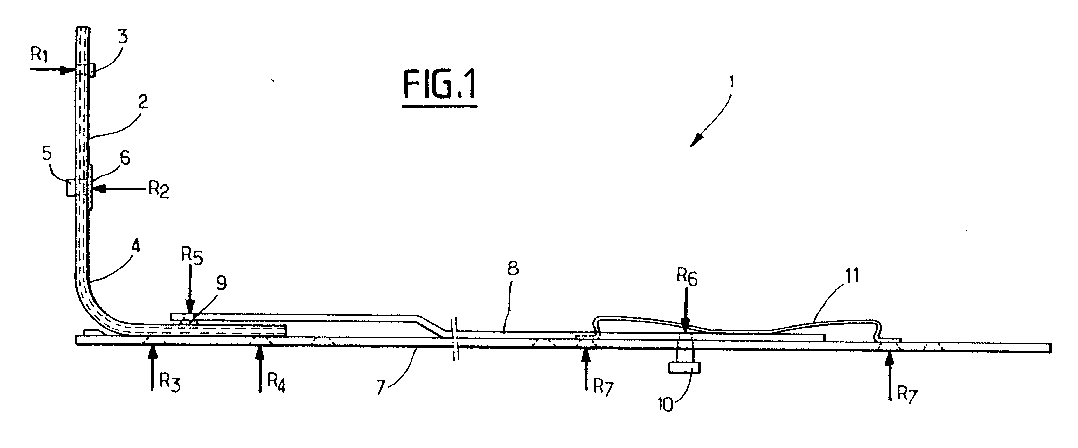

Afin de permettre une meilleure compréhension de l'objet de l'invention, la pièce de ferrure constituant le verrouillage latéral est représentée sur la figure 1.

Le verrouillage latéral 1 est constitué essentiellement d'une équerre 2 en général en laiton, d'une têtière 7, d'une tringle 8 et d'un galet de verrouillage 10.

L'équerre 2 est formée d'un profilé en U avec retours, formant un rail de guidage pour un ensemble élastique 4 constitué de préférence d'un paquet de ressorts lamellaires transmettant le coulissement des tringles dans l'angle de l'ouvrant. Une extrémité de ce paquet de ressorts lamellaires 4 supporte un axe d'accrochage 5 destiné à la liaison de cet élément de ferrure 1 avec la tringle d'un autre élément de ferrure. Cet axe 5 est retenu dans un orifice des ressorts lamellaires 4, par rivetage R2 dans une entretoise 6. L'autre extrémité du paquet de ressorts lamellaires 4 supporte un axe 9, dirigé quant à lui du côté de l'ouverture du rail, sur lequel est fixée par rivetage R5 une extrémité de la tringle 8. L'équerre comporte enfin un axe de blocage 3 fixé par rivetage R1 à proximité de l'extrémité de sa branche libre. L'équerre 2 ainsi pourvue des ressorts lamellaires 4, en général en acier, constitue le renvoi d'angle. Ce renvoi d'angle est fixé à une têtière 7 en général par soudage et dans le cas de la présente invention, par rivetage R3, R4 grâce à des crevés prévus sur la têtière 7. Sur la têtière 7 coulisse la tringle 8, fixée par rivetage R5 à l'axe 9 à une extrémité et soumise à la pression d'une lame de ressort 11 à proximité de son autre extrémité. A proximité de cette dernière extrémité, la tringle 8 supporte par rivetage R6 le galet de verrouillage 10 destiné à coopérer avec une gâche du dormant et traversant une ouverture oblongue de la têtière. Le ressort 11 est en général une simple lame de ressort maintenue sur la têtière 7

par deux axes rivetés sur celle-ci. Selon l'invention, afin de faciliter l'automatisation de l'assemblage, le ressort 11 est, comme il est représenté sur la figure 1, une lame préformée en oméga dont les retours viennent en appui sur la têtière 7, directement pour l'un et en traversant un orifice oblongue de la tringle 8 pour l'autre, et ils sont rivetés en R7 grâce à deux crevés prévus sur la têtière 7.

Si les dimensions de l'ouvrant sont importantes, plusieurs galets de verrouillage 10 (en général deux) et le nombre correspondant de ressorts de pression 11 peuvent être prévus à la suite les uns des autres sur la têtière 7 et sur la tringle 8.

Actuellement de tels dispositifs de verrouillage latéral sont réalisés grâce à des chaînes de montage où chaque assemblage est effectué par un poste manuel.

L'objet de l'invention est de proposer une chaîne d'assemblage automatique de verrouillages latéraux, en particulier destinés aux châssis oscillo-battants.

En effet, les opérations successives de montage manuel entraînent un coût de production élevé du fait des multiples manipulations et temps morts dus à la reprise, au positionnement et à l'assemblage des pièces. De surcroît les temps de montage étant inhérents au savoir faire et à la dextérité de l'opérateur, on observe de fortes variations dans les cycles et qualités de fabrication, ce qui nuit à la rentabilité et la productivité. En fait, l'opérateur doit prélever une ou deux pièces élémentaires dans des réceptacles (où elles sont placées en vrac par catégorie), réaliser l'assemblage à la main puis l'introduire dans un poste de rivetage pour réaliser la jonction, et en contrôler ensuite la bonne exécution.

Ces manipulations sont longues et fastidieuses en raison de leur répétitivité et entraînent rapidement des baisses sensibles de rendement.

L'invention a donc pour but de remédier à ces divers inconvénients et concerne à cet effet une installation d'assemblage automatisant ces différentes opérations, toutes les opérations s'enchaînant selon un flux continu.

L'objet de l'invention est donc une installation d'assemblage de pièces élémentaires, en particulier destiné à constituer une pièce de ferrure de verrouillage latéral, notamment de fenêtres oscillo-battantes, comportant un renvoi d'angle comprenant une équerre 2 formant un rail de guidage, un dispositif élastique 4 destiné à transmettre le coulissement des tringles dans l'angle de l'ouvrant, un axe d'accrochage 5 destiné à la liaison de ce renvoi d'angle avec la tringle d'un autre élément de ferrure et traversant un orifice du dispositif élastique 4, une entretoise 6 rivetée à l'axe 5, un axe de blocage 3 riveté à l'extrémité libre de l'équerre 2, ledit verrouillage latéral comportant également une têtière 7 sur laquelle est fixé le renvoi d'angle, une tringle 8 reliée à l'extrémité du dispositif élastique 4 et recevant au moins un galet de verrouillage 10 et un ressort riveté 11. Cette installation est remarquable en ce qu'elle comporte des moyens d'assemblage automatiques des différentes pièces élémentaires.

Selon un mode préféré de réalisation, l'installation conforme à l'invention comporte une ligne automatique d'assemblage des pièces élémentaires du renvoi d'angle, à savoir de l'équerre, de l'axe de blocage, du dispositif élastique, de l'axe d'accrochage et de l'entretoise.

Cette ligne est de préférence constituée de postes modulaires disposés selon un plan.

L'installation est également remarquable en ce qu'elle comporte une ligne automatique d'assemblage des pièces élémentaires que sont le renvoi d'angle équipé, la têtière et la tringle.

Cette dernière ligne est également de préférence constituée de postes modulaires disposés selon un plan.

L'installation est également remarquable en ce qu'elle comprend une ligne automatique d'assemblage des pièces élémentaires que sont le renvoi d'angle équipé, sur lequel sont fixées la têtière et la tringle, et au moins un galet de verrouillage.

De préférence cette dernière ligne est également constituée de postes modulaires disposés selon un plan.

L'installation peut également comporter une ligne automatique d'assemblage d'au moins un ressort sur la pièce de ferrure comportant un renvoi d'angle, une têtière, une tringle et au moins un galet de verrouillage.

Cette dernière ligne est constituée de préférence de postes modulaires disposés selon un plan.

Selon un mode de réalisation préféré mais non limitatif, les trois dernières lignes d'assemblage citées ci-dessus sont disposées les unes à la suite des autres pour former une ligne automatique continue d'équipement du renvoi d'angle.

Dans ce cas, de préférence, la ligne automatique d'assemblage des pièces élémentaires du renvoi d'angle est disposée parallèlement à cette ligne continue d'équipement, ces deux lignes d'assemblage étant reliées par un convoyeur transversal.

L'invention est exposée ci-après plus en détail à l'aide de dessins représentant selon un mode de réalisation préféré.

- la figure 2 représente en vue de dessus une installation automatique d'assemblage complète conforme à l'invention,
- les figures 3A et 3B représentent en élévation et en vue de dessus une ligne d'assemblage des différentes pièces élémentaires du renvoi d'angle,
- les figures 4A et 4B représentent en élévation et en vue de dessus la ligne de chargement des tringles et des têtières associée à la première ligne d'équipement du renvoi d'angle,
- les figures 5A et 5B représentent en élévation et en vue de dessus la deuxième ligne d'équipement des renvois d'angle,

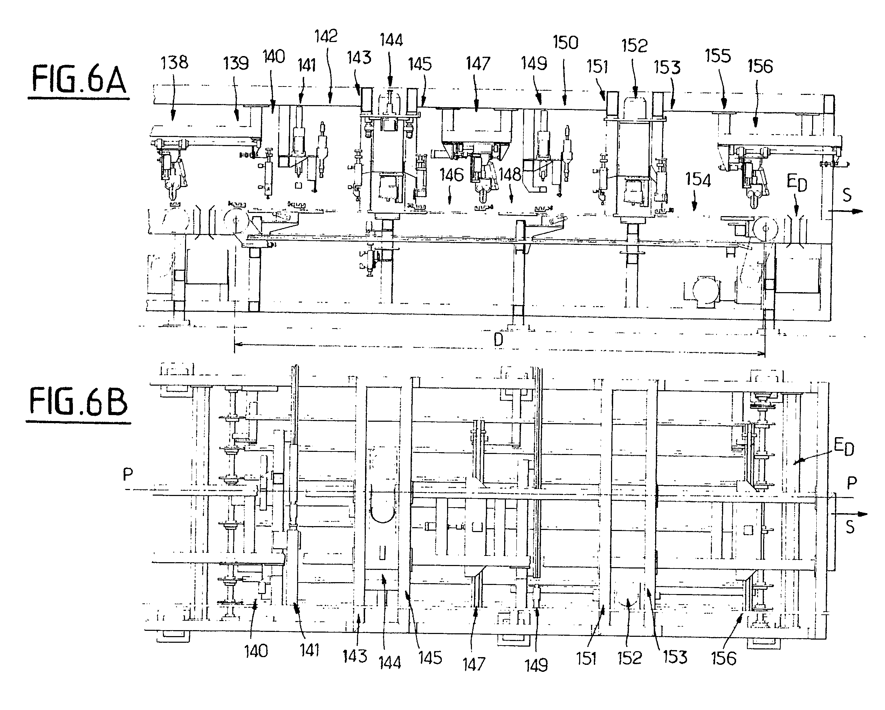

- les figures 6A et 6B représentent en élévation et en vue de dessus la troisième ligne d'équipement des renvois d'angle.

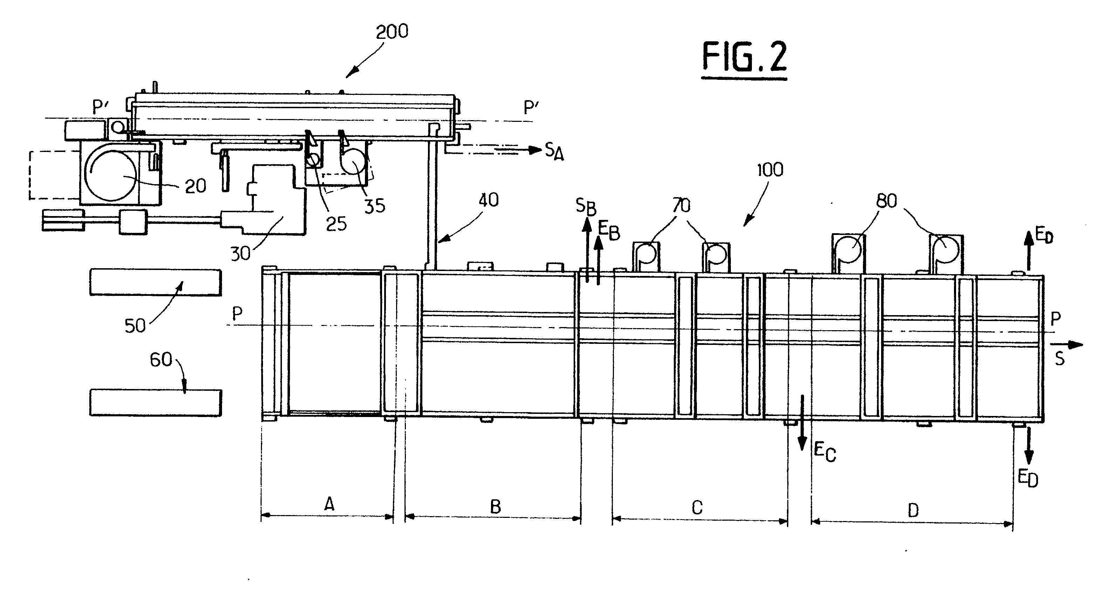

L'installation pour l'assemblage automatique des pièces de la ferrure de verrouillage latéral est représentée, vue de dessus sur la figure 2. Elle se compose d'une ligne automatique d'assemblage principale 100 destinée à l'assemblage des têtières 7, tringles 8 et de leurs accessoires 9, 10, 11 avec le renvoi d'angle 2 à 6 équipé.

Pour ce faire, est également prévue une ligne automatique d'assemblage 200 des différentes pièces du renvoi d'angle 2 à 6.

La ligne d'assemblage principale 100 et la ligne d'assemblage de renvoi d'angle 200 sont l'une comme l'autre constituées de postes modulaires disposés selon un plan, leurs plans respectifs PP et P'P' étant parallèles.

A ces lignes d'assemblage sont associés des dispositifs d'alimentation en pièces élémentaires.

La ligne d'assemblage 200 réalise :
- le rivetage R1 de l'axe de blocage 3 sur l'équerre 2,
- la mise en place du paquet de ressorts lamellaires 4 dans l'équerre 2,
- le rivetage R2 de l'axe d'accrochage 5 sur le paquet de ressorts 4 et l'entretoise 6.

En amont de cette ligne d'assemblage 200 est donc disposé un dispositif d'alimentation 20 en équerres nues 2, ce dispositif étant pourvu de préférence d'une trémie. Latéralement à la ligne 200, est principalement mis en place un dispositif de réalisation et d'alimentation 30 des paquets de ressorts lamellaires 4. Ce dispositif 30 est de préférence constitué d'un automate connu en soi, mais utilisé jusqu'alors en tant que poste de fabrication individuel. Sont également prévus un poste automatique d'alimentation 25 en axes d'accrochage 5 et un poste automatique d'alimentation 35 en entretoises 6.

Un convoyeur 40 transversal, de préférence de type tapis, transfère les renvois d'angle de la ligne 200 à la ligne 100.

En amont de cette dernière, sont placées deux zones de stockage dont l'une 50 est destinée aux têtières 7 et l'autre 60 aux tringles 8. Latéralement à la ligne principale 100 sont disposés deux dispositifs d'alimentation 70 en galets de verrouillage 10 et deux dispositifs d'alimentation 80 en ressorts de pression 11. Selon le mode de réalisation décrit, le verrouillage latéral fabriqué est destiné à réaliser deux points de verrouillage.

Cette ligne 100 réalise :

- le rivetage R3, R4 de la têtière 7 sur l'équerre équipée,
- le rivetage R5 de la tringle 8 sur l'axe d'accrochage tringle/ressort 9,
- le rivetage R6 d'un ou de deux galets de verrouillage 10 sur la tringle 8,
- le rivetage R7 d'un ou de deux ressorts de pression 11 sur la têtière 7.

Pour ce faire, la chaîne est constituée de trois zones de transfert qui seront précisées dans la suite. Une zone avant A contient des dispositifs de chargement des têtières 7 et des tringles 8 constitués de convoyeurs. Le chargement des têtières et des tringles sur ceux-ci est réalisé manuellement par un seul opérateur, récupérant ces pièces dans leur zone de stockage 50, 60 et les mettant en place sur les convoyeurs A.

La ligne automatique 100 comprend donc trois zones de transfert et d'assemblage automatique B, C, D, comportant chacune à leur extrémité aval au moins un dispositif d'évacuation des pièces de rebut défectueuses ; ces dispositifs sont symbolisés par les flèches E$_B$, E$_C$, E$_D$ ; les verrouillages terminés corrects sont quant à eux évacués en fin de ligne (flèche S).

La ligne d'assemblage des équerres 200 est équipée d'un convoyeur de transfert pas-à-pas, de préférence du type à chaîne ou à bande sans fin.

La ligne principale comporte quant à elle trois convoyeurs de transfert pas-à-pas, de préférence du type à chaîne ou à bande sans fin. Chaque zone B, C, D comporte donc un convoyeur.

La distribution des différentes pièces élémentaires se fait grâce à des bols vibrants et ces pièces sont mises en place dans les outillages de transfert par des manipulateurs. Le rivetage des différents éléments est réalisé par déformation à froid.

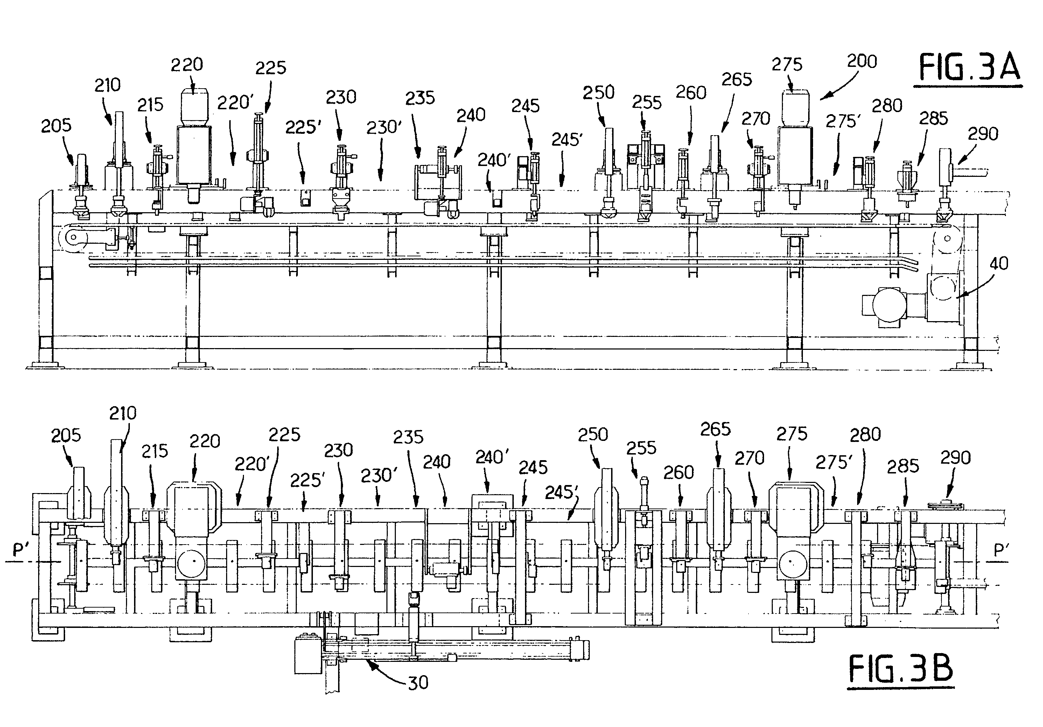

Sur les figures 3A et 3B est représentée la ligne automatique 200 d'assemblage des pièces élémentaires du renvoi d'angle, plus en détail.

Comme nous l'avons déjà vu, cette ligne d'assemblage 200 est constituée de postes modulaires disposés selon un plan P'P'. Ces différents postes modulaires sont :

- un poste 205 de pose de l'axe de blocage 3 dans l'outillage de transfert,
- un poste 210 de pose de l'équerre 2 sur l'axe de blocage 3,
- un poste 215 de contrôle de la pose de l'équerre sur l'axe de blocage,
- un poste de rivetage 220 de l'axe de blocage 3,
- un poste libre 220',
- un poste 225 de retournement d'un quart de tour de ces pièces assemblées, - un poste libre 225',
un poste 230 de mise en place et de graissage des ressorts lamellaires 4,

- un poste libre 230',
- un poste de finition 235 de la mise en place des ressorts lamellaires 4,
- un poste 240 de retournement d'un quart de tour de ces pièces assemblées,
- un poste libre 240',
- un poste 245 de positionnement des ressorts lamellaires 4 pour permettre la pose de l'axe d'accrochage 5,
- un poste libre 245',
- un poste 250 de pose de l'axe d'accrochage 5 dans l'outillage de transfert,
- un poste 255 de pose de l'équerre et des ressorts lamellaires sur l'axe d'accrochage 5,
- un poste 260 de contrôle du positionnement de l'équerre et des ressorts lamellaires sur l'axe 5,
- un poste 265 de pose de l'entretoise 6 sur l'axe 5,
- un poste 270 de contrôle du positionnement de l'entretoise 6 sur l'axe 5,
- un poste de rivetage 275 de l'axe 5 sur l'entretoise 6,
- un poste libre 275',
- un poste 280 de remise en position de l'équerre équipée pour le contrôle du fonctionnement,
- un poste 285 de contrôle du fonctionnement,
- un poste de déchargement 290 du renvoi d'angle équipé sur la ligne de transfert 40 ou de mise au rebut des renvois d'angle défectueux.

Comme il a déjà été vu, les paquets de ressorts lamellaires 4 sont fabriqués et distribués par l'automate 30. La ligne de transfert transversale 40 constituée de préférence d'un convoyeur à tapis évacue les renvois d'angle équipés pour les amener à la ligne automatique principale 100 qui va maintenant être décrite plus précisément.

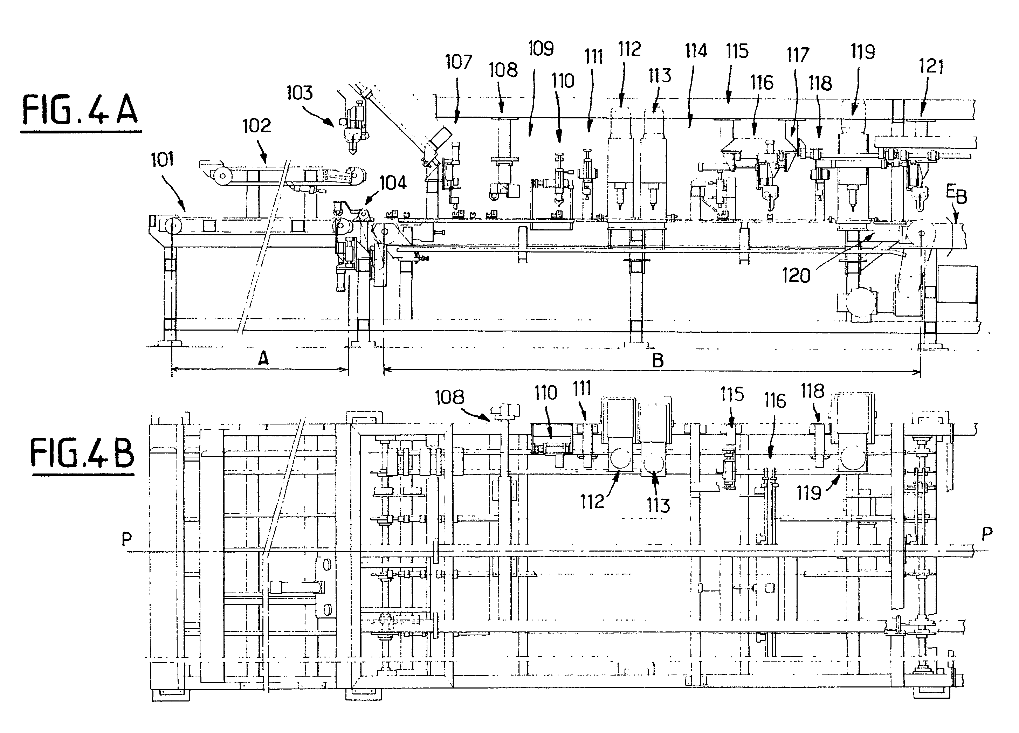

Les figures 4A et 4B représentent les deux premières zones de transfert A et B.

La zone de transfert A comporte deux convoyeurs à bande, dont l'inférieur 101 est un convoyeur pas-à-pas de chargement des têtières et dont le supérieur 102 est un convoyeur pas-à-pas de chargement des tringles. A l'extrémité aval du convoyeur 101 la têtière est saisie par le dispositif 104 qui est un retourneur de chargement tournant autour d'un axe horizontal et qui dépose la têtière à l'extrémité amont du convoyeur de la zone B, la têtière étant tournée de 180°. Le dispositif 103 de préhension de chargement des tringles est monté quant à lui sur une glissière oblique afin de descendre la tringle de sa position haute à sa position basse en extrémité amont du convoyeur de la zone B.

Cette zone de transfert pas-à-pas B comporte une série de postes modulaires disposés selon le plan PP et plus précisément :

- un poste 107 de contrôle de présence des crevés sur la têtière,

- un poste 108 de pose de l'équerre 2 équipée montée dans l'outillage de transfert, ce poste de pose coopérant avec le convoyeur de transfert 40 pour y récupérer l'équerre équipée et la transférer sur le convoyeur de la zone B,
- un poste libre 109,
- un poste 110 de pose de l'équerre équipée sur la têtière,
- un poste 111 de contrôle du positionnement de l'équerre sur la têtière,
- un poste de rivetage 112 de l'équerre sur la têtière,
- un second poste de rivetage 113 de l'équerre sur la têtière, - éventuellement, un poste de contrôle du rivetage,
- un poste libre 114,
- un poste 115 de positionnement de l'axe 9 sur les ressorts lamellaires 4 de l'équerre,
- un poste 116 de pose de la tringle 8 sur l'axe 9 des ressorts lamellaires 4,
- un poste libre 117,
- un poste 118 de contrôle du positionnement de la tringle 8,
- un poste de rivetage 119 de la tringle,
- un poste libre 120,
- un poste 121 de déchargement par préhension, à deux positions, ce poste transférant à ce niveau de la ligne d'assemblage les ferrures correctes dans la zone C et les ferrures défectueuses hors de la chaîne en tant que rebut (flèche E$_B$) ce poste de déchargement est constitué essentiellement d'un dispositif de prehension coulissant sur une glissière horizontale.

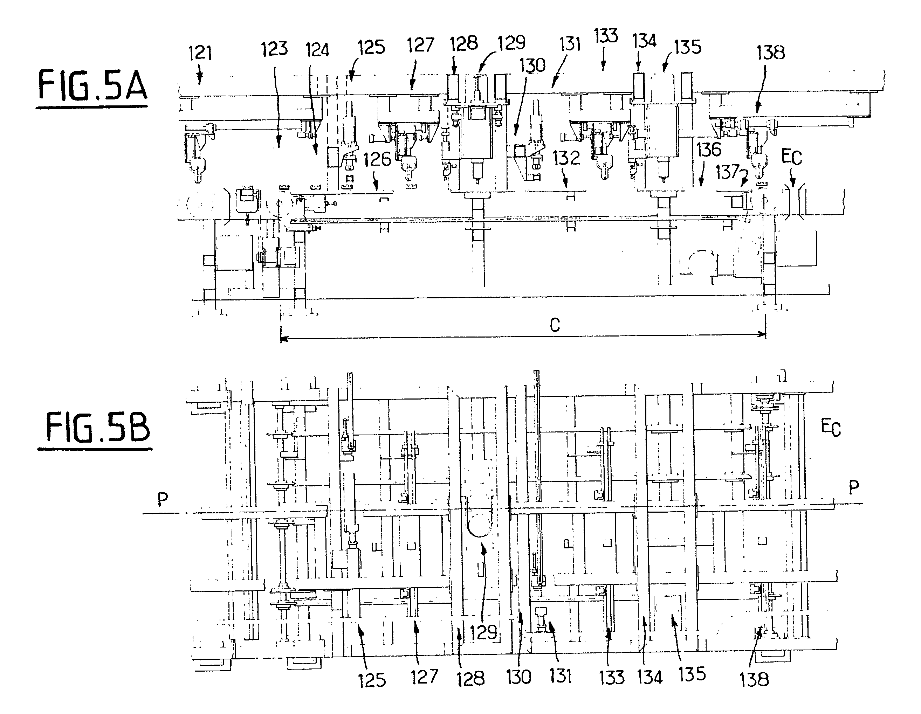

Les figures 5A et 5B représentent la zone de transfert suivante C. Le dispositif de préhension du poste de déchargement et de chargement 121 transfère donc l'élément de ferrure en position 123 en amont du convoyeur de la zone C. Cette zone C comporte alignés avec les précédents les postes modulaires suivants :
- un poste libre 124,
- un poste 125 de pose du premier galet de verrouillage 10 dans l'outillage de transfert,
- un poste libre 126,
- un poste 127 de pose de la têtière 7 et de la tringle 8 sur le galet de verrouillage 10,
- un poste 128 de contrôle du positionnement de la tringle 7 sur le galet 10,
- un poste de rivetage 129 du galet 10,
- un poste libre 130,
- un poste 131 de pose du deuxième galet de verrouillage dans l'outillage de transfert,
- un poste libre 132,
- un poste 133 de pose de la têtière et de la tringle sur le deuxième galet de verrouillage,
- un poste 134 de contrôle du positionnement de la tringle sur le deuxième galet de verrouillage,
- un poste de rivetage 135 du deuxième galet de verrouillage,
- deux postes libres 136, 137,
- un poste 138 de déchargement par préhension à deux positions, constitué de façon analogue au poste de déchargement précédent 121 et transférant, à ce stade de l'assemblage, les ferrures défectueuses pour la sortie de rebut E$_C$ et les ferrures correctes dans la troisième zone de transfert D.

A ce stade de l'assemblage, la ferrure est donc déposée en amont du convoyeur de la zone D en position 139 par le poste de déchargement 138. Cette zone D comporte un certain nombre de postes modulaires alignés avec les précédents et plus précisément :
- un poste 140 de contrôle de la présence des galets de verrouillage 10,
- un poste 141 de pose d'un premier ressort 11 sur la têtière 7,
- un poste 142 de graissage,
- un poste 143 du contrôle du positionnement du premier ressort sur la têtière,
- un poste de rivetage 144 du ressort 11, ce poste 144 effectuant le rivetage du premier crevé de la têtière, le rivetage du deuxième crevé de la têtière et enfin le contrôle du rivetage,
- un poste 145 de déverrouillage du ressort, ces trois postes 143, 144 et 145 étant montés sur un châssis commun,
- un poste libre 146,
- un poste 147 de changement de position des verrouillages latéraux,
- un poste libre 148,
- un poste 149 de pose du deuxième ressort sur la têtière,
- un poste 150 de graissage,
- un poste 151 de contrôle du positionnement du deuxième ressort sur la têtière,
- un poste de rivetage 152 du deuxième ressort, ce poste effectuant le rivetage du premier crevé de la têtière, du second crevé de la têtière et le contrôle du rivetage de ce ressort,
- un poste 153 de déverrouillage de ce ressort, ces trois postes 151, 152, et 153 étant montés sur un châssis commun,
- un poste libre 154,
- un poste 155 de contrôle du fonctionnement général du verrouillage latéral terminé,
- un poste 156 de déchargement des verrouillages finis, analogue aux postes de déchargement précédents 121 et 138 et effectuant également l'évacuation des verrouillages défectueux dans la sortie de rebut E$_D$.

Un opérateur chargé de l'emballage se trouve donc en sortie de la ligne automatique PP (flèche S).

Les sorties de rebut E$_B$, E$_C$ et E$_D$ sont réalisées par l'intermédiaire de goulottes de rejet par gravité.

L'installation automatique d'assemblage ainsi réalisée présente une longueur d'environ 16 m et une largeur comprise entre 5 et 6 mètres. Sa cadence instantanée est d'environ 600 pièces par heure avec un taux d'engagement de 0,75 , soit une cadence pratique d'environ 450 pièces par heure. L'installation nécessite deux opérateurs chargés de l'approvisionnement des têtières, tringles et divers composants nécessaires et un opérateur chargé de l'emballage en sortie de machine.

Il va de soi que le verrouillage latéral décrit sur la figure1 ne représente qu'un exemple de ferrure réalisé grâce à l'installation objet de l'invention. Les variantes de verrouillages (dimensions différentes, accessoires différents, dispositions différentes...) peuvent également être réalisées en adaptant éventuellement les postes et dispositifs de transfert.

D'autres lignes d'assemblage automatiques ou semi-automatiques peuvent être adaptées à cette installation de base.

En particulier, comme on peut le voir sur la figure 2, une sortie auxiliaire $S_A$ peut être prévue en fin de la ligne d'assemblage 200 du renvoi d'angle. Cette sortie est réalisée par le transfert du renvoi d'angle grâce par exemple à un convoyeur parallèle à la ligne 200, vers des postes d'assemblage, manuels ou automatiques. Ces postes peuvent permettre par exemple l'assemblage de verrouillages à renvoi d'angle et têtière courte, le galet de verrouillage 10 étant riveté à proximité de l'axe 9. La ligne d'assemblage complémentaire est alors une ligne partielle de même type que la ligne complète 100 décrite, avec un agencement particulier des lignes B, C, D.

D'autre part, une sortie $S_B$ peut également être prévue latéralement à la ligne 100. A ce niveau de la ligne d'assemblage 100, le renvoi d'angle est riveté sur la têtière et la tringle est positionnée et/ou rivetée sur l'axe 9 des ressorts lamellaires. La ferrure dans cette étape peut être complétée dans une ligne auxiliaire automatique ou semi-automatique, afin de réaliser par exemple des ferrures ne comportant pas de ressort 11, ni de rivetage R7, le maintien de la tringle sur la têtière étant réalisé alors par une pièce de guidage rivetée sur la têtière 7 et retenant la tringle 8.

**Revendications**

1) Installation d'assemblage de pièces élémentaires, en particulier destinées à constituer une pièce de ferrure de verrouillage latéral, notamment de fenêtres oscillo-battantes, comportant un renvoi d'angle comprenant une équerre (2) formant un rail de guidage, un dispositif élastique (4) destiné à transmettre le coulissement des tringles dans l'angle de l'ouvrant, un axe d'accrochage (5) destiné à la liaison de ce renvoi d'angle avec la tringle d'un autre élément de ferrure et traversant un orifice du dispositif élastique (4), une entretoise (6) rivetée à l'axe (5), un axe de blocage (3) riveté à l'extrémité libre de l'équerre (2), ledit verrouillage latéral comportant également une têtière (7) sur laquelle est fixé le renvoi d'angle, une tringle (8) reliée à l'extrémité du dispositif élastique(4) et recevant au moins un galet de verrouillage (10) et un ressort (11) riveté, installation caractérisée en ce qu'elle comporte des moyens d'assemblage automatique des différentes pièces élémentaires.

2) Installation selon la revendication 1, caractérisée en ce qu'elle comporte une ligne automatique (200) d'assemblage des pièces élémentaires du renvoi d'angle, à savoir de l'équerre (2), de l'axe de blocage (3), du dispositif élastique (4), de l'axe d'accrochage (5) et de l'entretoise (6).

3) Installation selon la revendication 2, caractérisée en ce que la ligne (200) est constituée de postes modulaires disposés selon un plan (P'P').

4) Installation selon la revendication 2 ou 3, caractérisée en ce que la ligne (200) comporte un convoyeur de transfert pas-à-pas.

5) Installation selon l'une quelconque des revendications 2 à 4, caractérisée en ce que sont associés à la ligne (200) :
- un dispositif d'alimentation automatique (20) en équerres nues (2),
- un dispositif de réalisation et d'alimentation automatique (30) des dispositifs élastiques (4),
- un poste automatique d'alimentation (25) en axes d'accrochage (5),
- un poste automatique d'alimentation (35) en entretoises (6).

6) Installation selon l'une quelconque des revendications 2 à 5, caractérisée en ce que la ligne (200) comprend :
- un poste (205) de pose de l'axe de blocage dans l'outillage de transfert,
- un poste (210) de pose de l'équerre sur l'axe de blocage,
- un poste de rivetage (220) de l'axe de blocage,
- un poste (230) de mise en place et de graissage du dispositif élastique,
- un poste de finition (235) de la mise en place du dispositif élastique,
- un poste (245) de positionnement du dispositif élastique pour permettre la pose de l'axe d'accrochage,
- un poste (250) de pose de l'axe d'accrochage dans l'outillage de transfert,
- un poste (255) de pose de l'équerre et du dispositif élastique,
- un poste (265) de pose de l'entretoise sur l'axe,
- un poste de rivetage (275) de l'axe sur l'entretoise,
- un poste (280) de remise en position de l'équerre équipée pour le contrôle du fonctionnement,

- un poste (285) de contrôle du fonctionnement,

- un poste de déchargement (290) du renvoi d'angle équipé permettant la mise au rebut des renvois d'angle défectueux.

7) Installation selon la revendication 6, caractérisée en ce que la ligne (200) comprend :

- un poste (215) de contrôle de la pose de l'équerre sur l'axe de blocage,

- un poste (260) de contrôle du positionnement de l'équerre et du dispositif élastique sur l'axe,

- un poste (270) de contrôle du positionnement de l'entretoise sur l'axe.

8) Installation selon la revendication 1, caractérisée en ce qu'elle comporte une ligne automatique B d'assemblage des pièces élémentaires que sont le renvoi d'angle équipé, la têtière (7) et la tringle (8).

9) Installation selon la revendication 8, caractérisée en ce que la ligne (B) est constituée de postes modulaires disposés selon un plan.

10) Installation selon la revendication 8 ou 9, caractérisée en ce que la ligne (B) comporte un convoyeur de transfert pas-à-pas.

11) Installation selon l'une quelconque des revendications 8 à 10, caractérisée en ce que la ligne (B) comprend :

- un poste (108) de pose de l'équerre équipée dans l'outillage de transfert,

- un poste (110) de pose de l'équerre équipée sur la têtière,

- au moins un poste de rivetage (112, 113) de l'équerre sur la têtière,

- un poste (115) de positionnement de l'axe (9) sur le dispositif élastique,

- un poste (116) de pose de la tringle sur l'axe (9) du dispositif élastique,

- un poste (119) de rivetage de la tringle,

12) Installation selon la revendication 11, caractérisée en ce que la ligne (B) comprend :

- un poste (107) de contrôle de présence des crevés sur la têtière,

- un poste (111) de contrôle du positionnement de l'équerre sur la têtière,

- un poste (118) de contrôle du positionnement de la tringle,

- un poste (121) de déchargement permettant la mise au rebut des pièces défectueuses.

13) Installation selon la revendication 1, caractérisée en ce qu'elle comporte une ligne automatique (C) d'assemblage des pièces élémentaires que sont le renvoi d'angle équipé, sur lequel sont fixées la têtière (7) et la tringle (8), et au moins un galet de verrouillage (10).

14) Installation selon la revendication 13 caractérisée en ce que la ligne (C) est constituée de postes modulaires disposés selon un plan.

15) Installation selon la revendication 13 ou 14, caractérisée en ce que la ligne (C) comporte un convoyeur de transfert pas-à-pas.

16) Installation selon l'une quelconque des revendications 13 à 15, caractérisée en ce que la ligne (C) comprend :

- au moins un poste de pose d'un galet de verrouillage dans l'outillage de transfert,

- au moins un poste de pose de la têtière (7) et de la tringle (8) sur le galet de verrouillage,

- au moins un poste de rivetage du galet (10),

17) Installation selon la revendication 16, caractérisée en ce que la ligne (C) comprend :

- au moins un poste de contrôle du positionnement de la tringle (7) sur le galet (10),

- un poste (138) de déchargement, permettant la mise au rebut des ferrures défectueuses.

18) Installation selon la revendication 1, caractérisée en ce qu'elle comporte une ligne automatique (D) d'assemblage d'au moins un ressort (11) sur la pièce de ferrure comportant un renvoi d'angle, une têtière, une tringle et au moins un galet de verrouillage assemblés.

19) Installation selon la revendication 18, caractérisée en ce que la ligne (D) est constituée de postes modulaires disposés selon un plan.

20) Installation selon la revendication 18 ou 19, caractérisée en ce que la ligne (D) comprend un convoyeur de transfert pas-à-pas.

21) Installation selon l'une quelconque des revendications 18 à 20, caractérisée en ce que la ligne (D) comprend :

- au moins un poste de pose d'un ressort (11) sur la têtière (7),

- au moins un poste de graissage,

- au moins un poste de rivetage du ressort (11),

- au moins un poste de déverrouillage du ressort,

22) Installation selon la revendication 21, caractérisée en ce que la ligne (D) comprend :

- un poste (140) de contrôle de la présence du ou des galet(s) de verrouillage,

- au moins un poste du contrôle du positionnement du ressort sur la têtière,

- un poste (155) de contrôle de fonctionnement général du verrouillage latéral terminé,

- un poste (156) de déchargement des verrouillages finis, permettant la mise au rebut des verrouillages défectueux.

23) Installation selon l'ensemble des revendications 8 à 22, caractérisée en ce que les lignes (B), (C), (D) sont disposées les unes à la suite des autres, formant ainsi une ligne automatique continue (100).

24) Installation selon la revendication 23, caractérisée en ce qu'en amont de la ligne (100) sont disposés des convoyeurs de chargement (101, 102) pour les têtières (7) et les tringles (8).

25) Installation selon l'ensemble des revendications 2 à 24, caractérisée en ce que la ligne (200) est disposée parallèlement à la ligne (100), ces deux lignes d'assemblage étant reliées par un convoyeur

transversal (40).

FIG.1

EP 0 414 582 A1

# FIG.2

EP 0 414 582 A1

FIG.3A

FIG.3B

40

P'

205 210 215 220 220' 225 225' 230 230' 235 240 240' 245 245' 250 255 260 265 270 275 275' 280 285 290

200

30

FIG. 4 A

FIG. 4 B

EP 0 414 582 A1

FIG.5A

FIG.5B

EP 0 414 582 A1

FIG.6A

FIG.6B

EP 0 414 582 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-305732 (SIEGENIA-FRANK)<br>* figure 1 *<br>--- | 1 | E05D15/52<br>B23P21/00<br>E05B17/00 |
| A | FR-A-2589933 (FERCO)<br>* abrégé; figure 1 *<br>--- | 1 | |
| A | EP-A-309371 (FERCO)<br>* abrégé; figures 1-4 *<br>--- | 1 | |
| P,A | FR-A-2627117 (FERCO)<br>* abrégé *<br>* page 1, lignes 24 - 31 *<br>* page 2, ligne 20 - page 4 *<br>* page 7, ligne 19 - page 15, ligne 22; figures 1, 8a, 8b *<br>--- | 1-17,<br>22-25 | |
| A | DE-A-1677198 (RHEINMETALL)<br>* page 1, ligne 12 - page 2, ligne 9 *<br>--- | 5, 12,<br>17, 22 | |
| A | METALWORKING PRODUCTION, vol. 101, 4 janvier 1957, page 16, (g9163)<br>* Page 16, paragraphe: "Automatic assembly" *<br>----- | 5, 18 | DOMAINES TECHNIQUES RECHERCHES (Int. Cl.5 )<br><br>E05D<br>B23P<br>E05B |

Le présent rapport a été établi pour toutes les revendications

| Lieu de la recherche | Date d'achèvement de la recherche | Examinateur |
|---|---|---|
| LA HAYE | 17 OCTOBRE 1990 | GUILLAUME G.E.P. |

EPO FORM 1503 03.82 (P0402)